# EUROPÄISCHE PATENTANMELDUNG

(11) **EP 2 703 660 A2**
(43) Veröffentlichungstag der Anmeldung: **05.03.2014**
(21) Anmeldenummer: 13180769.5
(22) Anmeldetag: 16.08.2013
(51) Int. Cl.: F16C 7/06, F16B 7/06

(54) **Zug-Druck-Stange**

(30) Priorität: 26.08.2012 DE 202012103223 U
(71) Anmelder: RO-RA Produktions GmbH, 4862 Schörfling a. Attersee (AT)
(72) Erfinder: Haller, Matthias, 4862 Schörfling (AT)
(74) Vertreter: Lösch, Christoph Ludwig Klaus

(57) **Zusammenfassung**

Die Erfindung betrifft eine Zug-Druck-Stange (1), aufweisend:
- einen hohlzylindrischen Mittelkörper (2);
- eine erste Befestigungsvorrichtung (3) mit einem ersten Kupplungselement (5) und einem daran angeordneten Schaft (7), wobei der Schaft (7) zur Längenveränderung der Zug-Druck-Stange (1) über eine Gewindeanordnung (9) relativ zum Mittelkörper (2) verdrehbar ist;
- eine zweite Befestigungsvorrichtung (4) mit einem zweiten Kupplungselement (6) und einem daran angeordneten Schaft (8);
- ein hülsenförmiges Anschlussstück (10), dessen außenseitige Mantelfläche drehfest mit dem Mittelteil (2) verbunden ist und in dessen innenseitige Mantelfläche eine Gleitfläche (14) des Schaftes (8) drehbar gelagert ist, wobei die Lagerung des Schaftes (8) in der innenseitige Mantelfläche ein definiertes Spiel in axialer Richtung der Zug-Druck-Stange (1), insbesondere ein Spiel von etwa 0,05 mm, besitzt.

## Beschreibung

Die Erfindung betrifft eine Zug-Druck-Stange.

Zug-Druck-Stangen, die beispielsweise im Flugzeugbau eingesetzt werden, weisen im Allgemeinen einen im Wesentlichen rohrförmigen Körper auf, an dessen Enden sich jeweils eine Befestigungsvorrichtung zur Montage der Zug-Druck-Stange an Montagepunkten befindet. Die Länge der Zug-Druck-Stange ist hierbei beispielsweise über eine oder mehrere Gewindeanordnungen verstellbar, um eine Anpassung an einen vorgegebenen Abstand zwischen den Montagepunkten vornehmen zu können.

Der Erfindung liegt die Aufgabe zugrunde, eine einfach handhabbare, insbesondere eine montagefreundliche, Zug-Druck-Stange anzubieten, die auch bei beengten Platzverhältnissen ohne Zuhilfenahme von Werkzeugen zu bedienen ist.

Diese Aufgabe wird durch die Merkmale des Schutzanspruchs 1 gelöst. Vorteilhafte Ausführungsformen sind in den Unteransprüchen beschrieben.

Erfindungsgemäß weist die Zug-Druck-Stange einen hohlzylindrischen Mittelkörper, eine erste Befestigungsvorrichtung mit einem ersten Kupplungselement und einem daran angeordneten Schaft, wobei der Schaft zur Längenveränderung der Zug-Druck-Stange über eine Gewindeanordnung relativ zum Mittelkörper verdrehbar ist, eine zweite Befestigungsvorrichtung mit einem zweiten Kupplungselement und einem daran angeordneten Schaft, und ein hülsenförmiges Anschlussstück auf, dessen außenseitige Mantelfläche drehfest mit dem Mittelteil verbunden ist und in dessen innenseitige Mantelfläche eine Gleitfläche des Schaftes drehbar gelagert ist, wobei die Lagerung des Schaftes in der innenseitige Mantelfläche ein definiertes Spiel in axialer Richtung der Zug-Druck-Stange, insbesondere ein Spiel von etwa 0,05 mm, besitzt.

Die erste Befestigungsvorrichtung bewirkt die Längenveränderung der Zug-Druck-Stange, während die zweite Befestigungsvorrichtung verdrehbar gelagert ist. Auf diese Weise kann eine Längenveränderung der Zug-Druck-Stange auch bei beengten Platzverhältnissen erfolgen, da nur ein Ende der Zug-Druckstange (nämlich die erste Befestigungsvorrichtung) zur Längenveränderung zugänglich sein muss und außerdem durch die freie Drehbarkeit der zweiten Befestigungsvorrichtung eine individuelle Positionierung und Drehung der Zug-Druck-Stange möglich ist.

Das Vorsehen eines definierten Spiels in axialer Richtung ermöglicht ein definiertes Verhalten der Zug-Druck-Stange bzw. der zweiten Befestigungsvorrichtung beim Aufbringen von Dreh- und/oder Kompressionskräften.

In einer vorteilhaften Ausführungsform ist die Gleitfläche des Schaftes in Richtung des zweiten Kupplungselementes durch einen radial umlaufenden Anschlag begrenzt. Außerdem kann die Gleitfläche des Schaftes in Richtung entgegen des zweiten Kupplungselementes durch ein um den Schaft angebrachtes Anschlagelement begrenzt werden. Der Anschlag und das Anschlagelement stellen eine besonders zuverlässige und einfach zu fertigende Möglichkeit dar, das Anschlussstück in axialer Richtung mit einem definierten Spiel zu lagern.

In besonders vorteilhafter Weise ist das Anschlagelement als Gewindehülse und/oder Schraubenmutter ausgebildet und in ein korrespondierendes Gewinde des Schaftes eingeschraubt. Auch kann das Anschlagelement in axialer Richtung durch einen Sicherungsstift und/oder Sicherungsring fixiert sein. Auf diese Weise ist eine besonders lagestabile Anordnung des Anschlagelements relativ zum Schaft möglich. sodass das definierte Spiel eingehalten wird.

In einer weiteren vorteilhaften Ausführungsform ist das Anschlagelement entweder alternativ oder zusätzlich zu der oben beschriebenen Gewindeverbindung mit dem Schaft verklebt. Auf diese Weise kann die Lagestabilität weiter verbessert werden.

In einer besonders vorteilhaften Ausführungsform ist das hülsenförmige Anschlussstück in axialer Richtung zwischen dem radial umlaufenden Anschlag und dem Anschlagelement positioniert und zwischen dem dem Anschlag zugewandten axialen Endbereich des hülsenförmigen Anschlussstücks und zwischen dem dem Anschlagelement zugewandten axialen Endbereich des hülsenförmigen Anschlussstückes ist jeweils ein radial umlaufender Spalt, insbesondere ein Spalt mit einer Dicke von etwa 0,05 mm, ausgebildet. In einer derartigen Ausführungsform ist zum einen eine leichtgängige Drehbarkeit der zweiten Befestigungsvorrichtung gewährleistet und zum anderen ist eine sichere axiale Lagerung mit einem definierten Spiel möglich.

In einer weiteren vorteilhaften Ausführungsform ist das hülsenförmige Anschlussstück als Gewindehülse ausgebildet und in ein korrespondierendes Gewinde des Mittelkörpers eingeschraubt. Alternativ oder zusätzlich kann das hülsenförmige Anschlussstück mit dem Mittelkörper verklebt sein. Auf diese Weise ist eine besonders lagestabile Anordnung des Anschlussstücks relativ zum Schaft möglich. sodass das definierte Spiel eingehalten wird.

Die Leichtgängigkeit der Drehbewegung der zweiten Befestigungsvorrichtung kann dadurch verbessert werden, dass die Gleitfläche des Schaftes ein Rauigkeit von kleiner gleich Ra 0,6 aufweist und/oder durch Vorsehen einer Gleitbeschichtung auf der Gleitfläche. Diese Gleitbeschichtung kann zugleich die tribologischen Eigenschaften der Gleitfläche verbessern.

Die Erfindung ist anhand eines Ausführungsbeispiels in den Zeichnungsfiguren weiter erläutert. Es zeigen:
- Fig. 1: eine Zug-Druck-Stange;
- Fig. 2: einen Axialschnitt der Zug-Druck-Stange aus Fig. 1 entlang der Linie A-A; und
- Fig. 3: einen vergrößerten Ausschnitt aus Fig. 2.

Gleiche bzw. gleichwirkenden Komponenten sind in den Zeichnungsfiguren jeweils mit gleichen Bezugszeichen gekennzeichnet.

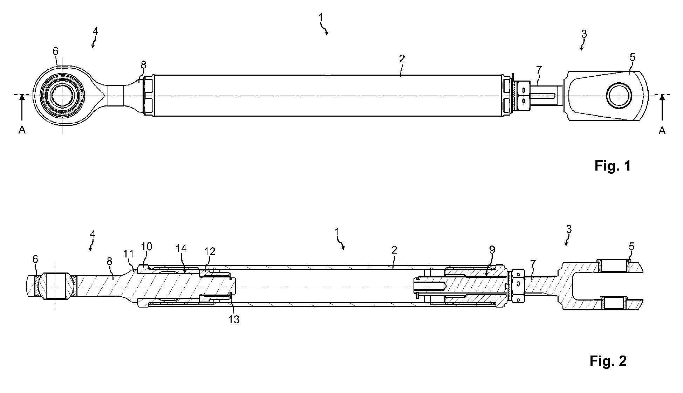

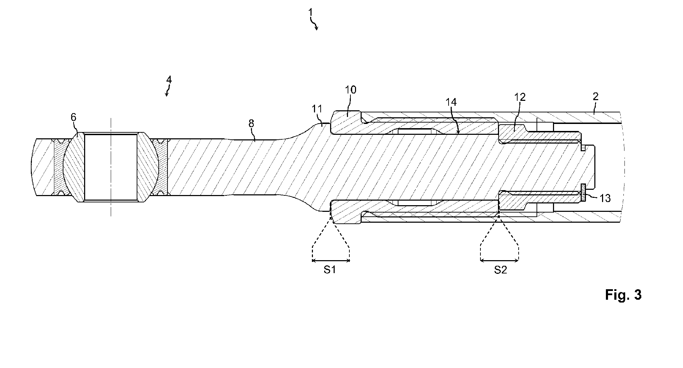

In den Fig. 1 bis 3 ist eine Ausführungsform einer Zug-Druck-Stange 1 gezeigt. Die Zug-Druck-Stange 1 weist einen rohrförmigen hohlzylindrischen Mittelkörper 2 auf, an dessen Enden sich jeweils eine Befestigungsvorrichtung 3 bzw. 4 befindet. Die erste Befestigungsvorrichtung 3 ist längenveränderlich mit dem Mittelkörper 2 verbunden, sodass die Länge der Zug-Druck-Stange 1 durch ein Hineindrehen der ersten Befestigungsvorrichtung 3 in den Mittelkörper 2 bzw. ein Herausdrehen der Befestigungsvorrichtung 3 aus dem Mittelkörper 2 eingestellt werden kann.

Die erste Befestigungsvorrichtung 3 besteht im Wesentlichen aus einem ersten Kupplungselement 5 und einem daran angeordneten Schaft 7. Das Kupplungselement 5 ist als Gabelkopf ausgebildet und dient zur Verbindung der Zug-Druck-Stange 1 mit benachbarten Bauteilen. Der Schaft 7 weist ein Außengewinde auf, das in ein am Mittelkörper 2 ausgebildetes korrespondierendes Innengewinde einschraubbar ist. Durch die durch diese beiden Gewinde gebildete Gewindeanordnung 9 ist die erste Befestigungsvorrichtung 3 relativ zum Mittelkörper verdrehbar, was zu der oben erwähnten Längenveränderung der Zug-Druck-Stange 1 führt.

Die zweite Befestigungsvorrichtung 4 weist ein zweites Kupplungselement 6 auf. Dieses Kupplungselement 6 dient ähnlich zum ersten Kupplungselement 5 der ersten Befestigungsvorrichtung 3 zur Verbindung der Zug-Druck-Stange mit benachbarten Bauteilen. Ein Schaft 8 der zweiten Befestigungsvorrichtung 4 ist relativ zum Mittelkörper 2 drehbar gelagert. Diese drehbare Lagerung wird durch Zwischenschalten eines hülsenförmigen Anschlussstückes 10 erreicht.

Das hülsenförmige Anschlussstück 10 weist ein Außengewinde auf, das in ein korrespondierendes Innengewinde des Mittelkörpers 2 eingeschraubt ist. Zur zusätzlichen Sicherung der Verbindung zwischen Anschlussstück 10 und Mittelkörper 2 kann die Gewindeverbindung zwischen Anschlussstück 10 und Mittelkörper 2 verklebt werden.

In axialer Richtung ist das Anschlussstück 10 zwischen einem radial umlaufenden Anschlag 11 des Schaftes 8 und einem Anschlagelement 12 positioniert. Zwischen dem Anschlag 11 und der Stirnseite des Anschlussstückes 10 sowie zwischen dem Anschlagelement 12 und der anderen Stirnseite des Anschlussstückes 10 ist jeweils ein Spalt S1 bzw. S2 ausgebildet. Der Spalt S1 bzw. S2 besitzt im beschriebenen Ausführungsbeispiel eine Dicke von 0,05 mm.

Das Anschlagelement 12 ist als Gewindehülse ausbildet, die mit einem innenliegenden Gewinde in ein korrespondierendes Gewinde des Schaftes 8 eingeschraubt ist. Zur zusätzlichen Sicherung der Verbindung zwischen Anschlagelement 12 und Schaft 8 kann die Gewindeverbindung zwischen Anschlagelement 12 und Schaft 8 verklebt werden. Ein Sicherungsring 13 sorgt für eine zusätzliche Sicherung des Anschlagelements 12 auf dem Schaft 8.

Die Relativbewegung zwischen der zweiter Befestigungsvorrichtung 4 und dem Mittelkörper 2 erfolgt auf einer Gleitfläche 14 des Schaftes 8. Mit anderen Worten gleitet die innenliegende Mantelfläche des hülsenförmigen Anschlussstückes 10 auf der korrespondierenden Mantelfläche des Schaftes 8. Diese Gleitfläche 14 wird in Richtung des zweiten Kupplungselementes 6 durch den radial umlaufenden Anschlag 11 und in Richtung entgegen des zweiten Kupplungselementes 6 durch das um den Schaft 8 angebrachte Anschlagelement 12 begrenzt. Die Gleitfläche 14 besitzt eine Rauigkeit von kleiner gleich Ra 0,6.

### BEZUGSZEICHENLISTE

- 1: Zug-Druck-Stange
- 2: Mittelkörper
- 3, 4: Befestigungsvorrichtung
- 5, 6: Kupplungselement
- 7, 8: Schaft
- 9: Gewindeanordnung
- 10: Anschlussstück
- 11: Anschlag
- 12: Anschlagelement
- 13: Sicherungsring
- 14: Gleitfläche
- S1, S2: Spalt

## Patentansprüche

1. Zug-Druck-Stange (1), aufweisend:
- einem hohlzylindrischen Mittelkörper (2);
- eine erste Befestigungsvorrichtung (3) mit einem ersten Kupplungselement (5) und einem daran angeordneten Schaft (7), wobei der Schaft (7) zur Längenveränderung der Zug-Druck-Stange (1) über eine Gewindeanordnung (9) relativ zum Mittelkörper (2) verdrehbar ist;
- eine zweite Befestigungsvorrichtung (4) mit einem zweiten Kupplungselement (6) und einem daran angeordneten Schaft (8);
- ein hülsenförmiges Anschlussstück (10), dessen außenseitige Mantelfläche drehfest mit dem Mittelteil (2) verbunden ist und in dessen innenseitige Mantelfläche eine Gleitfläche (14) des Schaftes (8) drehbar gelagert ist, wobei die Lagerung des Schaftes (8) in der innenseitige Mantelfläche ein definiertes Spiel in axialer Richtung der Zug-Druck-Stange (1), insbesondere ein Spiel von etwa 0,05 mm, besitzt.

2. Zug-Druck-Stange (1) nach Anspruch 1, wobei die Gleitfläche des Schaftes (8) in Richtung des zweiten Kupplungselementes (6) durch einen radial umlaufenden Anschlag (11) begrenzt ist.

3. Zug-Druck-Stange (1) nach einem der Ansprüche 1 oder 2, wobei die Gleitfläche des Schaftes (8) in Richtung entgegen des zweiten Kupplungselementes (6) durch ein um den Schaft (8) angebrachtes Anschlagelement (12) begrenzt ist.

4. Zug-Druck-Stange (1) nach Anspruch 3, wobei das Anschlagelement (12) als Gewindehülse und/oder Schraubenmutter ausgebildet ist und in ein korrespondierendes Gewinde des Schaftes (8) eingeschraubt ist.

5. Zug-Druck-Stange (1) nach einem der Ansprüche 3 oder 4, wobei das Anschlagelement (12) in axialer Richtung durch einen Sicherungsstift und/oder Sicherungsring (13) fixiert ist.

6. Zug-Druck-Stange (1) nach einem der Ansprüche 3 bis 5, wobei das Anschlagelement (12) mit dem Schaft (8) verklebt ist.

7. Zug-Druck-Stange (1) nach einem der Ansprüche 3 bis 6, rückbezogen auf Anspruch 2, wobei das hülsenförmige Anschlussstück (10) in axialer Richtung zwischen dem radial umlaufenden Anschlag (11) und dem Anschlagelement (12) positioniert ist und zwischen dem dem Anschlag (11) zugewandten axialen Endbereich des hülsenförmigen Anschlussstücks (10) und zwischen dem dem Anschlagelement (12) zugewandten axialen Endbereich des hülsenförmigen Anschlussstückes (10) jeweils ein radial umlaufender Spalt (S1, S2), insbesondere ein Spalt mit einer Dicke von etwa 0,05 mm, ausgebildet ist.

8. Zug-Druck-Stange (1) nach einem der vorhergehenden Ansprüche, wobei das hülsenförmige Anschlussstück (10) als Gewindehülse ausgebildet ist und in ein korrespondierendes Gewinde des Mittelkörpers (2) eingeschraubt ist.

9. Zug-Druck-Stange (1) nach einem der vorhergehenden Ansprüche, wobei das hülsenförmige Anschlussstück (10) mit dem Mittelkörper (2) verklebt ist.

10. Zug-Druck-Stange (1) nach einem der vorhergehenden Ansprüche, wobei die Gleitfläche des Schaftes (8) ein Rauigkeit von kleiner gleich Ra 0,6 aufweist.

11. Zug-Druck-Stange (1) nach einem der vorhergehenden Ansprüche, wobei die Gleitfläche des Schaftes (8) mit einer Gleitbeschichtung versehen ist.
